# FASCICULE DE BREVET EUROPEEN

(11) **EP 3 827 198 B1**
(45) Date de publication et mention de la délivrance du brevet: **01.03.2023**
(21) Numéro de dépôt: 19742448.4
(22) Date de dépôt: 17.06.2019
(51) Int. Cl.: F21S 43/50, B60Q 1/26, B60R 13/04

(54) **ENSEMBLE ENJOLIVEUR/BLOC OPTIQUE POUR VEHICULE AUTOMOBILE**
VERKLEIDUNGSANORDNUNG/OPTISCHER BLOCK FÜR EIN KRAFTFAHRZEUG
TRIM ASSEMBLY/OPTICAL BLOCK FOR A MOTOR VEHICLE

(30) Priorité: 24.07.2018 FR 1856824
(43) Date de publication de la demande: 02.06.2021
(73) Titulaire: PSA Automobiles SA, 78300 Poissy (FR)
(72) Inventeur: PERON, Rodolphe, 95220 HERBLAY (FR); GOUHINEC, Jean Paul, 78000 VERSAILLES (FR); BOUDAN, Julien, 91210 DRAVEIL (FR)
(86) Numéro de dépôt international: PCT/FR2019/051464
(87) Numéro de publication internationale: WO 2020/021172

(56) Documents cités:
- WO-A1-2011/124791
- JP-B2- 6 288 024
- US-A1- 2009 196 065
- US-A1- 2018 186 276

## Description

L'invention concerne, de façon générale, le domaine des faces avant et/ou arrière de véhicule présentant des blocs optiques ainsi qu'un enjoliveur, s'étendant entre lesdits blocs optiques ou dont au moins une extrémité est adjacente à un bloc optique.

Un véhicule automobile comprend de manière connue des blocs optiques ou feux de signalisation montés à l'avant et à l'arrière dudit véhicule. Ces blocs optiques permettent, d'une part, d'éclairer l'environnement du véhicule pour améliorer la visibilité du conducteur, notamment en condition nocturne, et, d'autre part, de signaler la position du véhicule aux autres usagers de la route.

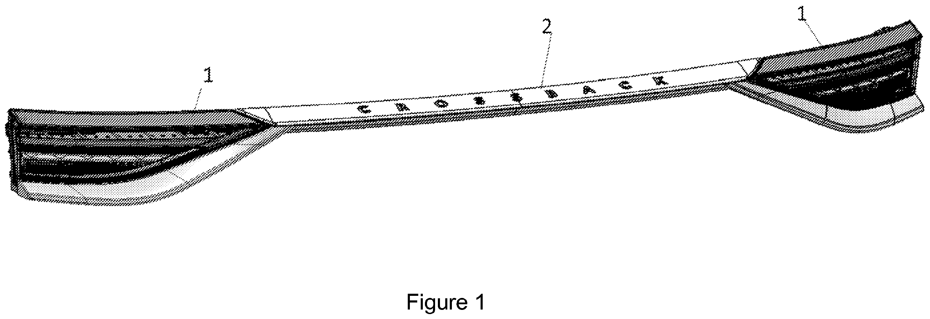

Comme illustré à la figure 1, un enjoliveur 2 peut être monté, par exemple sur un volet arrière de véhicule automobile de manière à s'étendre entre deux blocs optiques 1 constituant des feux arrières de signalisation, montés également sur le volet. Comme cela est connu, l'enjoliveur 2 présente une fonction d'amélioration esthétique, notamment afin d'optimiser la qualité perçue. L'enjoliveur 2 présente ainsi des extrémités conformées en correspondance d'une géométrie d'un bloc optique formant un ensemble esthétique.

Un tel enjoliveur 2 doit donc être positionné entre les deux feux arrières en présentant des jeux identiques avec les feux arrières de chaque côté de l'enjoliveur.

On connait par le document US20180186276 un sous-ensemble pour une face avant de véhicule comprenant une calandre, un boîtier supportant au moins une lumière, et une lentille fixée audit boîtier.

On connaît, par le document JP6288024, un véhicule automobile dont le volet arrière présente un enjoliveur s'étendant entre les deux feux arrières. Ainsi, les feux sont installés sur le volet arrière et comportent des lumières dans lesquelles se logent des moyens de clipsage portés par l'enjoliveur dont chacune des extrémités s'étend en travers du feu et se fixe ainsi sur le feu garantissant le positionnement correct de l'enjoliveur sur les feux.

Toutefois, une telle solution ne peut être appliquée que pour un enjoliveur s'étendant en travers du feu et non de manière adjacente au feu. En particulier, lorsqu'on cherche en outre à rendre un effet « flush » (affleurant dans le même plan) entre la glace du bloc optique et la surface extérieure de l'enjoliveur.

L'invention vise donc à résoudre ces inconvénients en proposant un ensemble comprenant un enjoliveur et au moins un bloc optique, permettant notamment la mise en place de l'enjoliveur entre des blocs optiques de sorte que chaque extrémité de l'enjoliveur soit positionnée par rapport aux feux avec des jeux et affleurements identiques tout en garantissant un positionnement et un montage simple de l'ensemble.

A cet effet, l'invention a pour objet un ensemble constitué d'un enjoliveur et d'au moins un bloc optique comprenant les caractéristiques de la revendication 1.

De manière avantageuse, on garantit ainsi que les jeux entre le bloc optique ou feu avant ou arrière et l'enjoliveur soient garantis de part et d'autre de l'enjoliveur mais en outre on garantit également un effet « flush » entre l'enjoliveur et le feu. Ainsi, un feu de signalisation par exemple est constitué d'un boîtier et d'une glace et on cherche, par exemple, à positionner la glace du feu et la face extérieure de l'enjoliveur de manière à être affleurantes dans un même plan pour obtenir cet effet « flush ».

Ainsi, l'engagement sous contrainte permet le positionnement adéquat du boîtier garantissant le jeu entre l'enjoliveur et le feu ainsi que l'affleurement entre la glace du feu et la face extérieure de l'enjoliveur.

Cette forme particulière du pion permet ainsi d'exercer une contrainte sur la largeur de la lumière et donc également sur l'enjoliveur lors.

Ainsi, à chaque extrémité de l'enjoliveur est ménagée une platine présentant la lumière. La platine est ménagée en retrait de la face extérieure de l'enjoliveur et définit une zone d'extrémité de l'enjoliveur sur laquelle vient se loger une partie du boîtier d'un feu. Cette zone d'extrémité permet la mise en place du boîtier de manière contigüe à l'enjoliveur.

Selon une forme de réalisation préférée, chaque platine comporte positionné adjacent à la lumière, un plot ou coussinet en matière souple tel que du silicone. De manière avantageuse, on garantit ainsi la mise en contrainte du feu superposé sur l'enjoliveur et on évite ainsi tous risques de vibration des deux pièces l'une par rapport à l'autre.

L'invention concerne également un élément de carrosserie d'un véhicule automobile comportant un ensemble selon l'invention. Selon une forme de réalisation préférée, l'élément de carrosserie est un volet arrière, l'enjoliveur sous forme d'une baguette s'étendant transversalement au volet arrière entre les feux arrières. Le volet arrière présente deux logements dans lesquels les boîtiers sont logés à l'extrémité de l'enjoliveur, l'enjoliveur s'étendant entre les deux feux.

L'invention concerne également un véhicule automobile comprenant un élément de carrosserie selon l'invention.

D'autres caractéristiques et avantages de l'invention apparaîtront à la lecture de la description détaillée de l'invention, en référence aux dessins dans lesquels :
- la figure 1 représente une vue en perspective d'un ensemble selon l'invention ;
- la figure 2 représente une vue en perspective d'un élément de carrosserie et un ensemble selon l'invention ;
- la figure 3 représente une vue en perspective d'une extrémité d'un enjoliveur d'un ensemble selon l'invention ;
- la figure 4, représente une vue en perspective d'une extrémité d'un boîtier de bloc optique d'un ensemble selon l'invention;
- la figure 5, représente une vue en perspective arrière d'un ensemble selon l'invention le boîtier étant emboîté sur l'enjoliveur, et
- la figure 6 représente une vue en perspective d'une autre forme de réalisation d'une extrémité d'un enjoliveur d'un ensemble selon l'invention

Dans ce qui va suivre, les modes de réalisation décrits s'attachent plus particulièrement à une mise en oeuvre du dispositif selon l'invention au sein d'un véhicule automobile. Cependant, toute mise en oeuvre dans un contexte différent, en particulier dans tout type de véhicule, est également visée par la présente invention.

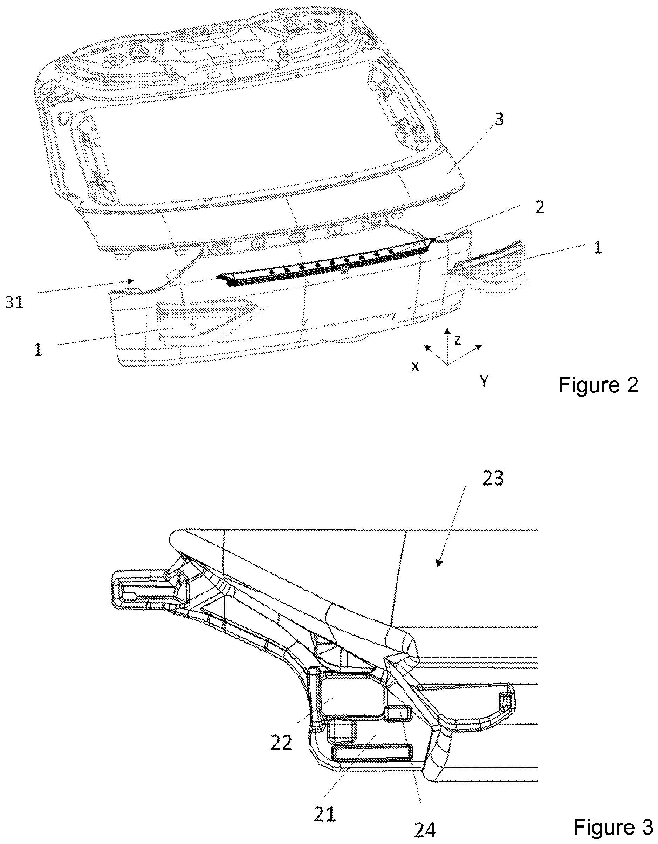

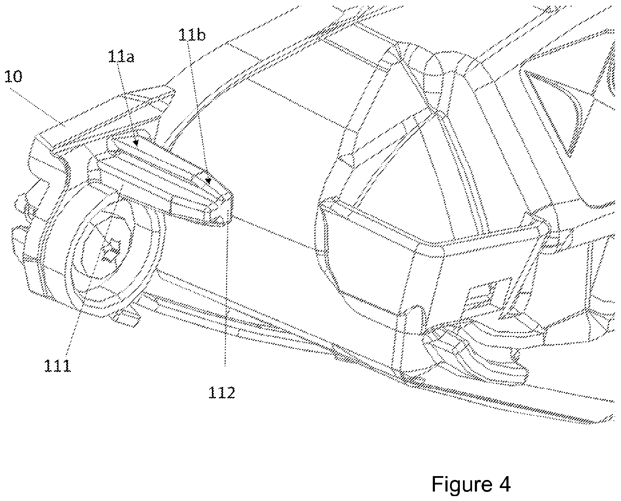

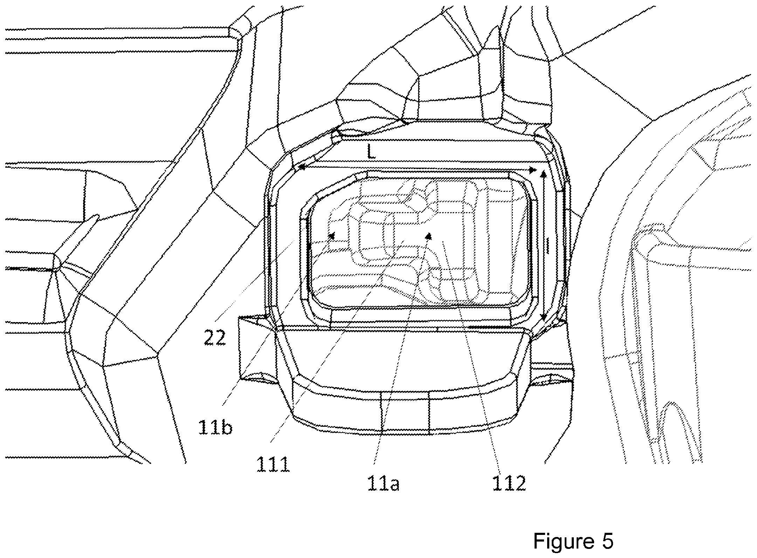

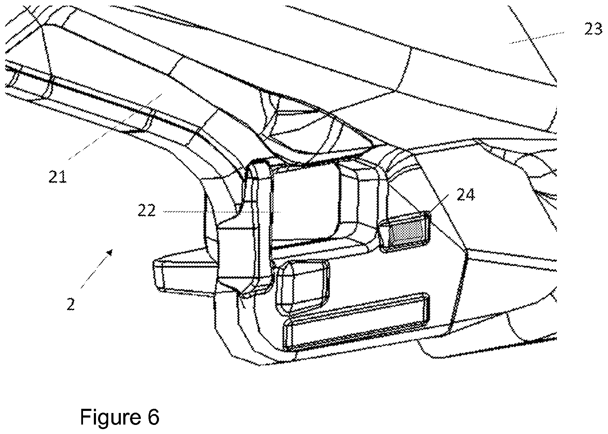

Les figures 1 à 6 représentent un bloc optique 1 ou des parties d'un tel bloc optique 1, destiné à être monté sur la structure d'un véhicule automobile (non représenté), par exemple sur une portion de carrosserie arrière dudit véhicule ou tout autre élément adapté de la structure du véhicule. Le bloc optique 1 comprend notamment un boîtier 10.

Sur ces figures, on définit un repère orthogonal (X, Y, Z) où :
- X est un premier axe qui est parallèle à l'axe longitudinal d'un véhicule
- Y est un deuxième axe qui est parallèle à l'axe transversal du véhicule automobile
- Z est un troisième axe qui est parallèle à l'axe vertical du véhicule.

Dans l'exemple de la figure 1, le bloc optique 1 qui est ici un feu de signalisation arrière comprend un boîtier 10. Le bloc optique 1 est destiné à être monté sur le volet arrière 3 du véhicule automobile. Ainsi, on positionne un feu arrière 1 de chaque côté du volet arrière 3 dans des logements 31 ménagés à cet effet sur ce volet 3.

Sur ce volet arrière 3 est également mis en place un enjoliveur 2 monté sur ledit volet 3das un logement 32 de manière à s'étendre entre les deux feux 1. Les bords des feux 1 et de l'enjoliveur 2 sont adjacents, de forme complémentaire et présentent des jeux et affleurements identiques de chaque côté de l'enjoliveur 2.

L'enjoliveur 2 est constitué d'une pièce en forme de baguette fixable sur le volet arrière 3 de manière connue en soi. Cet enjoliveur 2 s'étend transversalement au volet 3 selon l'axe Y du véhicule dans l'emplacement 32 et est conformé pour s'étendre entre les feux arrières 1. Ses extrémités sont complémentaires de la périphérie des feux 1 tout en garantissant les jeux et affleurements entre enjoliveur 2 et feu 1. En particulier, la glace des feux doit se trouver affleurante avec la face extérieure 23 de l'enjoliveur 2.

Ainsi, chaque feu 1 et plus précisément chaque boîtier 10 de feu présente un moyen d'indexage 11 coopérant avec un moyen d'indexage complémentaire 22 ménagé à l'extrémité de l'enjoliveur 2 pour garantir un accostage correct du feu 1 sur l'enjoliveur 2 garantissant notamment les jeux et affleurements entre le feu 1 et l'enjoliveur 2.

Lors de la mise en place, on fixe d'abord l'enjoliveur 2 sur le volet arrière 3 puis on met en place un feu 1 sur le volet arrière 3. Le boîtier 10 présente en général de vis engageables dans des trous ménagés dans le volet 3 pour permettre la fixation du feu 1.

A chaque extrémité de l'enjoliveur 2 est ménagée une platine 21 présentant une lumière 22. Cette platine 21 est ménagée en retrait de la face extérieure de l'enjoliveur 2 et définit une zone d'extrémité de l'enjoliveur 2 sur laquelle vient se loger une partie du boîtier 10 du feu.

Cette partie d'extrémité du boîtier 10 est pourvue d'un moyen d'indexage 11 du boîtier 10 sur l'enjoliveur 2. Ce moyen d'indexage est constitué d'un pion 11 ménagé en saillie sur la face arrière du boitier 10 du feu 1. Ce pion 11 est propre à s'engager dans la lumière 22 en tant que moyen d'indexage complémentaire de l'enjoliveur de la platine 21 de l'enjoliveur 2.

Ce pion 11 est réalisé d'une pièce avec le boîtier 10 du feu 1 et présente une partie distale 11a d'engagement dans la lumière 22. Cette partie distale 11a présente une forme et des dimensions lui permettant de s'engager facilement dans la lumière 22 tandis que la partie principale 11b dudit pion 11 présente des dimensions supérieures à celles de la partie distale 11a et permettant un engagement de la partie principale 11b du pion 11 dans la lumière 22 sous contrainte.

Ainsi, lorsqu'on met en place le boîtier 10 du feu sur le volet 3, les vis s'engagent dans les trous correspondant pour la fixation et le pion d'indexage 11 s'engage dans la lumière 22 de la platine 21 de l'enjoliveur 2.

La lumière 22 présente une section sensiblement rectangulaire et le pion 11 présente de préférence une section en forme de T, la tige 111 du T s'étendant dans la longueur L de la lumière 22 et la barre 112 du T s'étendant dans la largeur I de la lumière 22.

La longueur L de la lumière 22 s'étend sensiblement selon l'axe longitudinal de l'enjoliveur en forme de baguette 2 ce qui correspond à l'axe transversal du volet 3 et donc à l'axe Y du véhicule une fois le volet 3 monté sur véhicule.

La barre 112 du pion 11s'étend selon la largeur de la lumière 22 et exerce une contrainte selon cette même largeur de la lumière 22. De ce fait, une fois l'ensemble monté sur véhicule, le pion exerce une contrainte sur l'enjoliveur 2 selon l'axe Z du véhicule, qui peut ainsi se positionner au mieux.

Le pion d'indexage 11 est en outre dimensionné de telle sorte qu'il y ait une mise en contrainte de l'enjoliveur 2, qui présente lui une certaine souplesse. Cette mise en contrainte garantit le positionnement du feu 1 avec un accostage correct du boîtier 10 sur la platine 21 et une obtention correcte des jeux et affleurements entre boîtier 10 et enjoliveur 2.

Ainsi, les moyens d'indexage prévus dans l'ensemble selon l'invention permettent une légère déformation de l'enjoliveur 2 ce qui permet de garantir un accostage correct de chaque boîtier 10 sur les extrémités de l'enjoliveur 2, garantissant une même position du côté droit que du côté gauche par rapport aux feux 1 à la fois au niveau de jeux entre l'enjoliveur et le feu et à la fois en garantissant l'affleurement entre enjoliveur et

De préférence, chaque platine 21 peut également comporter un coussinet 24 en matière souple tel que du silicone. On assure ainsi un appui entre l'enjoliveur 2 et le feu 1 renforçant ainsi les affleurements entre la glace du feu 1 et la surface extérieure 23 de l'enjoliveur qui sont garantis.
Ce coussinet 24 en silicone est également ajouté pour garantir la mise en contrainte en X (par rapport à l'axe du véhicule sur lequel est monté le volet 3) de l'enjoliveur 2 par rapport au feu 1 et éviter ainsi tous risques de vibration des deux pièces 2, 1 l'une par rapport à l'autre.

Une fois les deux feux 1 assemblés sur le volet 2, les extrémités 21 de l'enjoliveur 2 de volet sont prises en sandwich entre le feu 1 et la peau du volet 3. Il n'y a plus de risque de mouvements, vibration des extrémités et les jeux entre les feux 1 et l'enjoliveur 2 sont identiques de chaque côté. L'affleurement de l'enjoliveur 2 et des glaces des feux est parfaitement réalisé.

## Revendications

1. Ensemble constitué d'un enjoliveur (2) et d'au moins un bloc optique (1), des moyens d'indexage étant prévus sur le bloc optique (1) et l'enjoliveur (2), l'enjoliveur (2) présentant à une extrémité une platine (21) pourvue d'une lumière (22) constituant un moyen d'indexage, le bloc optique (1) présentant en tant que moyen d'indexage complémentaire, un pion (11) ménagé sur le boîtier (10) du bloc optique (1) et engageable au travers de la lumière (22), ledit pion (11) présentant une extrémité d'engagement (11a) dans la lumière (22) et un corps principal (11b) dont les dimensions sont appropriées pour engager de manière contrainte ledit pion (11) dans la lumière (22), le logement du pion (11) sous contrainte dans la lumière (22) permettant un positionnement adéquat du bloc optique (1) et de l'enjoliveur (2), **caractérisé en ce que** le pion (11) est réalisé d'une pièce avec le boîtier (10) du feu (1) en saillie sur la face arrière dudit boitier (10), **en ce que** le pion (11) présente une partie distale (11a) d'engagement dans la lumière (22) et une partie principale (11b), les parties distale et principale étant de forme équivalente, la partie principale (11b) présentant des dimensions supérieures à celles de la partie distale (11a) de sorte à permettre un engagement de la partie principale (11b) du pion (11) dans la lumière (22) sous contrainte, **en ce que** la lumière (22) présente une section rectangulaire et le pion (11) présente une section en forme de T, la tige (111) du T propre à s'étendre dans la longueur (L) de la lumière (22) et la barre (112) du T s'étendant dans la largeur I de la lumière (22), et **en ce qu'**il comprend un enjoliveur (2) se présentant sous forme d'une baguette et de deux bloc optiques ou feux (1) positionnés à chaque extrémité de l'enjoliveur (2).

2. Ensemble selon la revendication 1, **caractérisé en ce qu'**à chaque extrémité de l'enjoliveur (2) est ménagée une platine (21) présentant la lumière (22), cette platine (21) étant ménagée en retrait de la face extérieure (23) de l'enjoliveur (2) et définit une zone d'extrémité de l'enjoliveur (2) sur laquelle vient se loger une partie du boîtier (10) d'un feu (1).

3. Ensemble selon l'une des revendications 1 à 2, **caractérisé en ce que** chaque platine (21) comporte positionné adjacent à la lumière (22) un coussinet (24) en matière souple tel que du silicone.

4. Elément de carrosserie d'un véhicule automobile comportant un ensemble selon l'une des revendications 1 à 3.

5. Elément de carrosserie selon la revendication 1, **caractérisé en ce que** ledit élément est un volet arrière.

6. Véhicule automobile comprenant un élément de carrosserie selon l'une des revendications 4 et 5.

## Patentansprüche

1. Einheit, bestehend aus einer Zierkappe (2) und mindestens einem optischen Block (1), wobei Indexierungsmittel auf dem optischen Block (1) und der Zierkappe (2) vorgesehen sind, wobei die Zierkappe (2) an einem Ende eine Platine (21) aufweist, die mit einem Licht (22) versehen ist, das ein Indexierungsmittel darstellt, die optische Einheit (1) als komplementäres Indexierungsmittel einen Stift (11) aufweist, der am Gehäuse (10) der optischen Einheit (1) angebracht ist und durch die Öffnung (22) hindurch in Eingriff gebracht werden kann, wobei der Stift (11) ein in das Lumen (22) eingreifendes Ende (11a) und einen Hauptkörper (11b) aufweist, dessen Abmessungen geeignet sind, den Stift (11) zwangsweise in das Lumen (22) einzugreifen, wobei die Aufnahme des Stifts (11) unter Spannung in dem Lumen (22) eine angemessene Positionierung der Leuchteinheit (1) und der Zierleiste (2) ermöglicht, **dadurch gekennzeichnet, dass** der Stift (11) einstückig mit dem Gehäuse (10) der Leuchte (1) hergestellt ist, das über die Rückseite des Gehäuses (10) hinausragt, dass der Stift (11) einen distalen Teil (11a) zum Eingriff in das Lumen (22) und einen Hauptteil (11b) aufweist, wobei der distale und der Hauptteil eine äquivalente Form haben und der Hauptteil (11b) größere Abmessungen als der distale Teil (11a) aufweist, so dass ein Eingriff des Hauptteils (11b) des Stifts (11) in das Lumen (22) unter Spannung möglich ist, dass das Lumen (22) einen rechteckigen Querschnitt aufweist und der Stift (11) einen T-förmigen Querschnitt aufweist, wobei sich der Schaft (111) des T in der Länge (L) des Lumens (22) und die Stange (112) des T in der Breite I des Lumens (22) erstrecken kann, und dass es eine Zierleiste (2) in Form einer Leiste und zwei an jedem Ende der Zierleiste (2) positionierte Leuchteneinheiten oder Leuchten (1) umfasst.

2. Baugruppe nach Anspruch 1, **dadurch gekennzeichnet, dass** an jedem Ende der Zierleiste (2) eine Platine (21) mit dem Licht (22) vorgesehen ist, wobei diese Platine (21) von der Außenseite (23) der Zierleiste (2) zurückversetzt ist und einen Endbereich der Zierleiste (2) definiert, auf dem ein Teil des Gehäuses (10) einer Leuchte (1) sitzt.

3. Baugruppe nach einem der Ansprüche 1 bis 2, **dadurch gekennzeichnet, dass** jede Platine (21) ein Polster (24) aus einem weichen Material wie Silikon aufweist, das neben der Öffnung (22) positioniert ist.

4. Karosserieteil eines Kraftfahrzeugs, das eine Baugruppe nach einem der Ansprüche 1 bis 3 umfasst.

5. Karosserieelement nach Anspruch 1, **dadurch gekennzeichnet, dass** das Element eine Heckklappe ist.

6. Kraftfahrzeug mit einem Karosserieteil nach einem der Ansprüche 4 oder 5.

## Claims

1. Assembly consisting of a cover (2) and at least one optical unit (1), indexing means being provided on the optical unit (1) and the cover (2), the cover (2) having at one end a plate (21) provided with an aperture (22) constituting an indexing means the optical block (1) having, as a complementary indexing means, a pin (11) provided on the housing (10) of the optical block (1) and engageable through the aperture (22) said pin (11) having an engagement end (11a) in the aperture (22) and a main body (11b) whose dimensions are suitable for constrainingly engaging said pin (11) in the aperture (22) the housing of the pin (11) under stress in the aperture (22) allowing adequate positioning of the optical unit (1) and the cover (2), **characterised in that** the pin (11) is made in one piece with the housing (10) of the lamp (1) projecting from the rear face of said housing (10), **in that** the pin (11) has a distal portion (11a) for engagement in the aperture (22) and a main portion (11b), the distal and main portions being of equivalent shape, the main portion (11b) having dimensions greater than those of the distal portion (11a) so as to allow engagement of the main portion (11b) of the pin (11) in the aperture (22) under stress **in that** the aperture (22) has a rectangular cross-section and the pin (11) has a T-shaped cross-section, the stem (111) of the T being adapted to extend along the length (L) of the aperture (22) and the bar (112) of the T extending across the width (I) of the aperture (22), and **in that** it comprises a cover (2) in the form of a strip and two optical units or lights (1) positioned at each end of the cover (2).

2. Assembly according to claim 1, **characterised in that** at each end of the hubcap (2) there is a plate (21) with the light (22), this plate (21) being set back from the outer face (23) of the hubcap (2) and defining an end zone of the hubcap (2) on which a part of the housing (10) of a light (1) is housed.

3. An assembly according to one of claims 1 to 2, **characterised in that** each plate (21) comprises, positioned adjacent to the aperture (22), a pad (24) of flexible material such as silicone.

4. Bodywork element of a motor vehicle comprising an assembly according to one of claims 1 to 3.

5. A bodywork element according to claim 1, **characterised in that** said element is a rear flap.

6. A motor vehicle comprising a body element according to any of claims 4 and 5.
